## Europäisches Patentamt

## European Patent Office

## Office européen des brevets

(11) Publication number: **0 100 663**
**B1**

# EUROPEAN PATENT SPECIFICATION

(45) Date of publication of patent specification: **19.11.87**

(51) Int. Cl.⁴: **G 01 N 35/02, B 01 L 3/00**

(21) Application number: **83304394.6**

(22) Date of filing: **29.07.83**

(54) Dilution cups for spectrophotometer analyzer.

(30) Priority: **30.07.82 US 404595**
**23.06.83 US 506907**

(43) Date of publication of application:
**15.02.84 Bulletin 84/07**

(45) Publication of the grant of the patent:
**19.11.87 Bulletin 87/47**

(84) Designated Contracting States:
**DE FR GB**

(56) References cited:
**WO-A-82/02948**
**WO-A-83/00047**
**US-A-4 170 625**
**US-A-4 276 258**

(73) Proprietor: **Corning Glass Works**
**Houghton Park**
**Corning New York 14831 (US)**

(72) Inventor: **Herrmann, Raymond J.**
**1131 Fernwood Drive**
**Westlake Ohio 44145 (US)**

(74) Representative: **Boon, Graham Anthony et al**
**Elkington and Fife High Holborn House 52/54**
**High Holborn**
**London, WC1V 6SH (GB)**

Courier Press, Leamington Spa, England.

## Description

This invention relates to a spectrophotometer analyzer, and more particularly to the dilution cups used in such analyzer.

Many types of spectrophotometer analyzers (see e.g. US—A—4170625) employ a turntable transport having an inner circle of sample (or serum) cups and a spaced outer row of reaction (or reagent) cups. In operation, the serum, for example, in each inner circle cup is aspirated out to a corresponding outer circle reaction cup where it is mixed with a suitable reagent before being analyzed. In the analysis of certain types of physiological fluids it is desirable, and often mandatory, that the fluid in each inner circle cup be first diluted automatically with a suitable diluting agent before it is aspirated into the corresponding outer circle reaction cup.

Therefore, it is an object of an aspect of the invention to provide a spectrophotometer analyzer with automatic means for diluting the fluid in the inner circle sample cups before they are aspirated into the corresponding outer circle reaction cups.

According to the invention there is provided a spectrophotometer analyzer having a turntable transport with an outer circle of spaced reaction cups and a spaced inner circle of sample cups, characterized by an intermediate circle of dilution cups formed of a plurality of unitary multi-cup one-piece arc units disposed between the inner and outer circles of cups.

The invention thus provides an intermediate circle of dilution cups interposed between the inner circle of sample cups and the outer circle of reaction cups whereby dilution of fluids from the sample cups may be effected before aspiration into the corresponding outer circle of reaction cups.

Preferably each multi-cup one-piece arc unit has securing means for detachably securing the arc unit to the outer circle of reaction cups.

The dilution cups are preferably of highly polished material, with each cup having a concave floor ensuring central bottom positioning of a minute quantity of fluid in the cup to achieve complete mixing of the dispensed fluids. A further object of the invention is to provide a novel interior configuration of each reaction cup, the new configuration inhibiting incomplete mixing, due to splash, of liquid samples injected into the reaction cup.

In a preferred form of the invention the unitary, one-piece, dilution cups are designed to be thrown away after use. The cups are moulded together, side-by-side, in a circular arc, preferably five cups per arc, in a one-piece, multi-cup unit. Each one-piece arc unit of five cups may be detachably secured to the radially outer row of reaction cups on the transport by means of a pair of spaced radial arms extending radially outward from the outer side of the five cup arc unit, such arms being positionable in the space between adjacent reaction cups. Formed on the outer end of each arm is a vertical rod of larger width than the spaces between the reaction cups, thus enabling the arc unit of five dilution cups to be detachably "hooked on" to the reaction cups. Each dilution cup is formed of highly polished material and each cup has a concave floor thus ensuring positive central bottom positioning of a minute quantity of fluid therein to achieve complete mixing of the dispensed fluids. In the preferred form, the floor of each dilution cup is formed of four downwardly sloping coacting planar floor sections formed together to provide a concave floor.

In the accompanying drawings:

Figure 1 is a perspective view of a spectrophotometer analyzer incorporating the invention;

Figure 2 is an enlarged top plan view of the outer and intermediate circles of cups shown on the turntable transport of the spectrophotometer analyzer of Figure 1;

Figure 3 is a front elevational view taken along the line 3—3 of Figure 2;

Figure 4 is a rear perspective view of a portion of the two circles of cups shown in Figure 2;

Figure 5 is an enlarged side elevational sectional view taken along the line 5—5 of Figure 2;

Figure 6 is a top plan view of one arc unit forming the intermediate circle dilution cups shown in Figure 2;

Figure 7 is a view taken along the line 7—7 of Figure 6;

Figure 8 is a view taken along lines 8—8 of Figure 7;

Figure 9 is a vertical cross-sectional view of a novel reaction cup according to the practice of this invention, and illustrates its operation in cooperation with a conventional dispensing tube; and

Figure 10 is a view similar to Figure 9 and illustrates the filling action of a typical, prior art reaction cup.

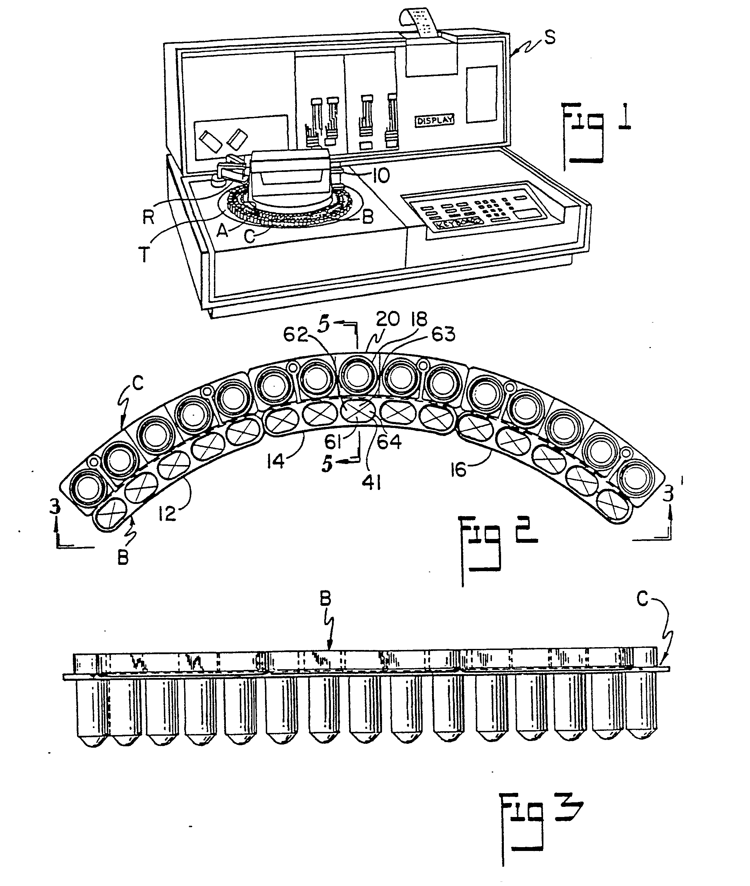

For the purpose of clarity, an initial brief description of part of the operation of the spectrophotometer analyzer S, shown in Figure 1, will now be given.

The analyzer S has a turntable transport T on which are disposed three circles of cups, namely the inner circle of sample cups A, the intermediate circle of dilution cups B, and the outer circle of reaction cups C. A physiological solution, such as, for example, blood serum, is transferred or aspirated automatically by the dispense probe 10 from a sample cup in the inner circle of cups A, thence radially outward to a corresponding dilution cup in the intermediate circle of dilution cups B where the serum is diluted by a suitable dilutant, thence radially outward to a corresponding reaction cup in the outer circle of cups C where a reagent reacts with the diluted serum in preparation for analysis. Next the turntable transport T is rotated in pretimed sequence to position the cups in the outer circle C, one-by-one, in front of the readout station R for spectrophotometric analysis.

One aspect of the invention is particularly directed to the intermediate circle B of dilution cups, such circle B being formed of a plurality of unitary, multi-cup, one-piece, partially circular arc units 12, 14 and 16, (Figure 2) disposed between the inner and outer circles A and C of cups, each multi-cup arc unit 12, 14, 16 etc., having securing means thereon (to be described) for detachably securing each arc unit to the outer circle C of reaction cups.

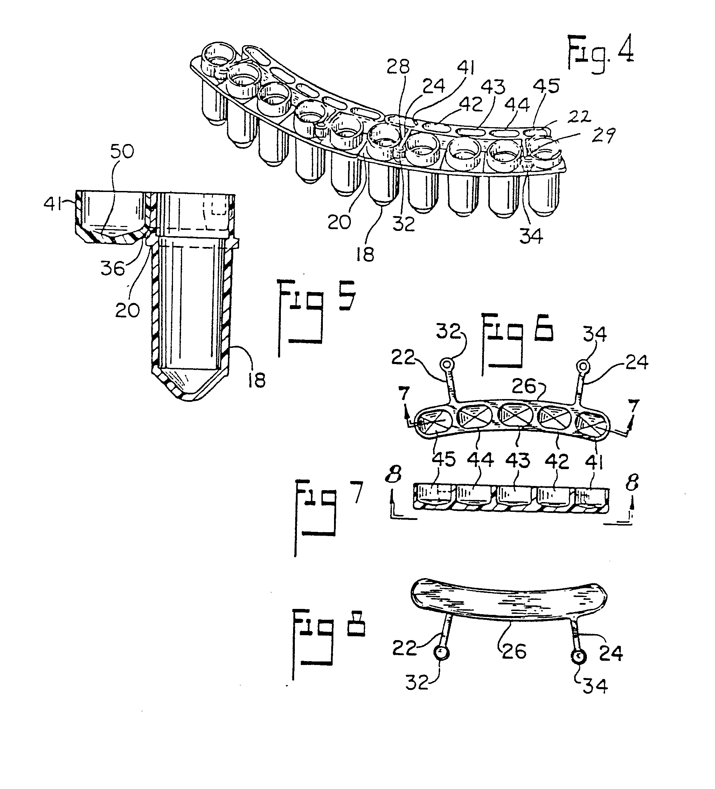

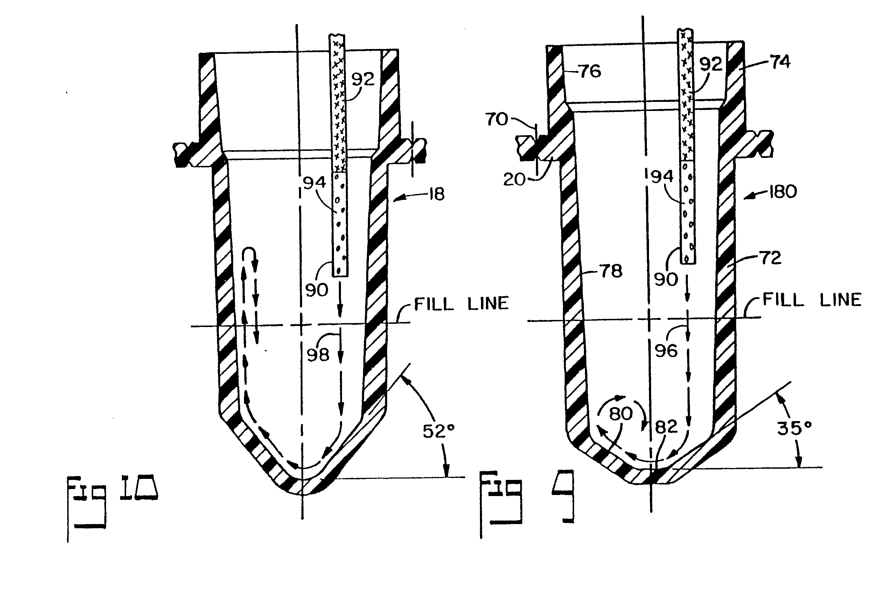

Referring to Figures 4 to 8, each reaction cup 18, for example, has a horizontal flange 20 encircling its outer surface and spaced from the top of the cup. The aforementioned securing means includes a pair of spaced radial arms 22, 24 extending radially outward from the outer side 26 of each multi-cup arc unit for positioning in the respective spaces 28, 29, for example between corresponding reaction cups in the outer circle C. Each arm 22, 24 has a vertical rod 32, 34 respectively, on its outer end of larger width than the space (28, 29) between adjacent reaction cups, thereby enabling the multi-cup arc unit to be detachably hooked on to the outer circle C of reaction cups with the lower outer edge 36 (Figure 5) of the arc unit resting on the reaction cup flange(s) 20, such that the bottom surface of the dilution cups is approximately flush with the bottom surface of the reaction cup flanges.

There is thus provided a unitary, one-piece plurality of intermediate (throw-away) dilution cups for the turntable transport T on a spectrophotometer analyzer S. The cups 41, 42, 43, 44, 45, are moulded together, side-by-side, in a circular arc, preferably five cups per arc, in a one-piece, multi-cup unit. Each one-piece arc unit of five cups may be detachably secured to the radially outer circle C of reaction cups on the transport T by means of the pair of spaced radial arms 22, 24 extending radially outward from the outer side of the five cup arc unit, such arms being positionable in the space between adjacent reaction cups. As aforementioned each arm 22, 24 has a vertical rod, 32, 34 respectively of larger width than the space between the reaction cups, thus enabling the arc unit of five dilution cups to be detachably "hooked on" to the reaction cups.

Referring to Figure 5, each dilution cup 41, (for example), is formed of highly polished material and each cup has a concave floor 50 thus ensuring positive central bottom positioning of a minute quantity of fluid therein to achieve complete mixing of the dispensed fluids. In a preferred form of the invention, the floor of the cup 41, for example, (Figure 2) is formed of four downwardly sloping coacting planar floor sections 61, 62, 63, 64, formed together to provide a concave floor.

Also, in a preferred form of the invention, the cross-section of each dilution cup is elliptical, as best shown in Figures 2 and 6.

The invention also includes a dilution cup unitary structure including a plurality of cavities 41, 42, 43, 44, 45 disposed in side-by-side relationship forming a one-piece multi-cavity partially circular arc unit for a spectrophotometer analyzer turntable transport T. As aforedescribed, such structure is formed of a highly polished material and it is preferred that each arc unit has five cavities therein and that the floor of each cavity is concave. Also, the floor of each cavity may be formed of four downwardly sloping coacting planar floor sections 61, 62, 63, 64, formed together to provide a concave floor, and the cavities may be elliptical in cross-section.

Also, it is to be understood that the intermediate circle of dilution cups B and the outer circle of reaction cups C, shown in Figure 4, may be formed or moulded as a single, unitary one-piece unit.

Referring now to Figure 9 of the drawings, a novel construction of a reaction cup is shown. Figure 10, drawn next to Figure 9 for purposes of comparison and explanation, is similar to the reaction cup illustrated at Figure 5 and, accordingly, bears the same reference numeral 18 as the latter.

Again, referring specifically to Figure 9, the numeral 180 illustrates a modified form of reaction cup and includes the integral horizontal flanges 20 previously described. The numeral 70 denotes one of a pair of oppositely disposed scores or channels of indentation on both sides of horizontal flanges 20, to facilitate individual breaking off of each reaction cup whenever desired. The numeral 72 denotes the vertically extending wall of the reaction cup 180, with the uppermost portion of the vertical wall denoted by the numeral 74. The numeral 76 denotes the upper interior surface of reaction cup 180, while numeral 78 denotes the lowermost, main interior surface of the reaction cup. The numeral 80 denotes sloping side walls of the lower portion of the reaction cup, while numeral 82 denotes a central, flat portion whose periphery is integrally connected to the lowermost portions of sloping bottom portion 80. The uppermost portions of the sloping sides 80 are seen to be integrally connected with the lower wall 72 and its interior surface 78.

The numeral 90 denotes the hollow needle tube of a syringe having a typical inside diameter of 0.027 inch (0.69 mm) for dispensing a reagent and serum into the reaction cup 180. In accordance with practice in this art, the syringe needle tube 90 is first partially filled with a reagent, denoted by the numeral 92, with the tube tip then immersed into a quantity of serum 94 and the syringe plunger further withdrawn slightly, thereby to yield the illustrated dual, reagent-serum in the tube 90, these two liquids being stratified. The reader will understand that a similar syringe tube may be employed with the reaction cup 18 shown at Figures 5 and 10. In operation, the reagent and serum are dispensed from tube 90 with a relatively high velocity, by pushing the syringe plunger to churn the resultant solution during filling of reagent cup 180 and thus effectively mixing the serum with the reagent. The velocity of the reagent-serum liquid mass in tube 90 upon syringe plunger actuation is typically 1.2 metres per second, or a flow rate of about 450 microlitres per second. The reaction cup may or may not already contain a third liquid. This technique is itself known and need not further be described.

The numeral 96 at Figure 9 denotes a typical trajectory of a particle of the reagent-serum mix dispensed from tube 90. The trajectory is illustrated by a series of arrows. In trajectory 96, the dispensed liquid passes down into the lower portion of cup 180, strikes sloping wall portion 80, passes over central, flat portion 82, up the opposite wall portion 80 and thence back around itself, the entire action taking place below the indicated fill line of liquid in the reagent cup.

To understand the trajectory 96 of Figure 9 more fully, reference is now made to a corresponding trajectory 98 of Figure 10, this being a trajectory typically undergone by a particle of serum or reagent with a conventionally configured reaction cup 18. Trajectory 98 commences usually generally vertically, as does trajectory 96, and also exhibits the same initial curved path upon striking the sloping walls of the lower part of the reaction cup, then passes over a central curved portion, up an opposite sloping portion, and thence upwardly and quite often beyond the indicated fill line. Particles or droplets of liquid passing upwardly beyond the indicated fill line often adhere to the interior surface of the reaction cup. A portion of this liquid will fall back into the fill line, but there usually is a portion which adheres to the sides of the reaction cup above the indicated fill line. The reader will now be in a position to understand better the difference in trajectories 96 and 98. With the trajectory such as 96, all of the liquid dispensed from tube 90 remains below the fill line and is accordingly intimately mixed with the liquid in the bottom of the reaction cup. Rather small differences in volume of the serum or reagent which finally participate in the intimate mixing action in the bottom of the reaction cup are significant, and accordingly the loss, due to sticking on the side walls above the fill line, of any of these liquids may introduce errors in subsequent spectrophotometric analysis. The total height of reaction cup 180 is about 28 mm and its smallest inner diameter about 8 mm. Depending on the chemistry involved, typically the reaction cup 180 is filled to a height of about between 11 mm and 18 mm.

The difference in trajectories 96 and 98 may be explained as follows. As indicated at Figure 10, the angle between the sloping portions of the bottom of the reaction cup and the horizontal is approximately 52°. This has been a typical prior art angle. This angle results in the stream or trajectory 98 following the cup contour in riding up along the opposite cup wall. The momentum, with the prior art constructions shown at Figures 5 and 10, is large enough to carry the stream most of the way up the cup wall. When it falls back down, a trail of droplets is usually left on the walls above the fill line and hence does not become mixed. The serum 94, being the first to be ejected from needle 90, is usually the component which adheres to the interior side wall of the reaction cup. This trail of unmixed droplets which remains on the interior wall of the reaction cup above the fill line is referred to in this art as splash (this is the meaning of the term splash as used in the claims). The amount of splash may be as much as 20% of the total, dispensed serum. This amount of unmixed serum may introduce an error as much as 20% in analysis.

Referring now again to the construction illustrated at Figure 9, when the angle of the sloping portions 80 is made smaller, as for example about 35° as indicated at Figure 9. The particles of liquid in trajectory 96 are redirected toward the cup centre after their initial upward movements. The redirected stream is churned with the dispensing stream resulting in complete mixing. The small flat area 82 at the centre of reaction cup 180 serves to disperse the stream momentum. Its size is kept relatively small to allow it to work or to cooperate with the tapered portion 80 to prevent the initial portion of the dispensed liquid from moving into a corner away from the churning action. The desirable trajectory 96, as opposed to a typical prior art trajectory 98 with accompanying splash behaviour, may be enjoyed by making the angle 80 less than 45° with respect to the horizontal. In practice, it appears that an angle of 35° as indicated at Figure 9, would yield optimum results.

**Claims**

1. A spectrophotometer analyzer (S) having a turntable transport (T) with an outer circle (C) of spaced reaction cups (18, 180) and a spaced inner circle (A) of sample cups, characterized by an intermediate circle (B) of dilution cups (41—45) formed of a plurality of unitary multi-cup one-piece arc units (12, 14, 16) disposed between the inner and outer circles (A, C) of cups.

2. An analyzer as claimed in claim 1, wherein each multi-cup arc unit (12, 14, 16) has securing means (22, 24) thereon for detachably securing the arc unit to the outer circle (C) of reaction cups (18, 180).

3. An analyzer as claimed in claim 1 or 2, wherein said intermediate circle (B) of dilution cups (41—45) and said outer circle (C) of reaction cups (18, 180) are formed as a single, unitary, one-piece unit.

4. An analyzer as claimed in claim 2, wherein each reaction cup (18, 180) has a horizontal flange (20) encircling its outer surface and spaced from the top of each reaction cup, and said securing means (22, 24) includes a pair of spaced radial arms extending radially outward from the outer side (26) of each multi-cup arc unit (12, 14, 16) for positioning in the respective spaces (28, 29) between corresponding reaction cups (18, 180) in the outer circle (C), each arm having a vertical rod (32, 34) on its outer end of larger width than the space (28, 29) between adjacent reaction cups (18, 180) thereby enabling the multi-cup arc unit (12, 14, 16) to be detachably hooked on to the outer circle (C) of reaction cups (18, 180) with the lower outer edge (36) of the arc unit resting on the reaction cup flanges (20).

5. An analyzer as claimed in claim 1, wherein each dilution cup has a concave floor.

6. An analyzer as claimed in claim 5, wherein each dilution cup (41—45) is formed of a highly polished material.

7. An analyzer as claimed in claim 5 or 6, wherein the floor of each dilution cup (41—45) is formed of four downwardly sloping coacting planar floor sections (61—64) formed together to provide said concave floor.

8. An analyzer as claimed in any preceding claim, wherein each arc unit (12, 14, 16) has five cups (41—45) therein.

9. An analyzer as claimed in any preceding claim wherein the dilution cups (41—45) are approximately elliptical in cross-section.

10. An analyzer as claimed in claim 1, wherein each reaction cup (180) is vertically disposed and adapted to receive a downwardly directed stream of liquid, each reaction cup (180) including a generally vertical upstanding wall (72) of continuous annular extent, each reaction cup (180) being open at the top, the bottom interior of each reaction cup (180) having a flat portion (82) at its centre, the periphery of said flat portion (82), being joined to the lower portion of the wall (72) by a sloping portion (80), the angles of the sloping portion (80) with the horizontal being less than about 45°, whereby splash, with resultant incomplete mixing, is inhibited.

11. An analyzer as claimed in claim 10, wherein the angle of the sloping portion (80) of each reaction cup (180) is about 35°.

**Patentansprüche**

1. Spektralphotometer-Analysegerät (S), das einen Drehtischtransport (T) mit einem Außenkreis (C) von beabstandeten Reaktionsprüfbechern (18, 180) und einen beabstandeten Innenkreis (A) von Probenprüfbechern aufweist, gekennzeichnet durch einen Zwischenkreis (B) aus Verdünnungsprüfbechern (41—45), die aus einer Vielzahl von unitären einstückigen Mehrfachprüfbecher-Bogeneinheiten (12, 14, 16) gebildet sind, die zwischen dem Innenkreis (A) und dem Außenkreis (C) der Prüfbecher angeordnet sind.

2. Analysegerät nach Anspruch 1, dadurch gekennzeichnet, daß auf jeder Mehrfachprüfbecher-Bogeneinheit (12, 14, 16) Befestigungseinrichtungen (22, 24) zur lösbaren Befestigung der Bogeneinheit an dem Außenkreis (C) der Reaktionsprüfbecher (18, 180) vorgesehen sind.

3. Analysegerät nach Anspruch 1 oder 2, dadurch gekennzeichnet, daß der Zwischenkreis (B) aus Verdünnungsprüfbechern (41—45) und der Außenkreis (C) aus Reaktionsprüfbechern (18, 180) als einzelne unitäre einstückige Einheiten ausgebildet sind.

4. Analysegerät nach Anspruch 2, dadurch gekennzeichnet, daß jeder Reaktionsprüfbecher (18, 180) einen horizontalen Flansch (20) besitzt, der dessen Außenfläche umgibt und von der Oberseite jedes Reaktionsbechers beabstandet ist, und daß die Befestigungseinrichtung (22, 24) ein Paar beabstandeter radialer Arme aufweist, die sich radial nach außen von der Außenseite (26) jeder Mehrfachprüfbecher-Bogeneinheit (12, 14, 16) zur Anordnung in den entsprechenden Räumen (28, 29) zwischen korrespondierenden Reaktionsprüfbechern (18, 180) in dem Außenkreis (C) erstrekken, wobei jeder Arm an senem Außenende einen vertikalen Stab (32, 34) mit größerer Breite als der Raum (28, 29) zwischen benachbarten Reaktionsprüfbechern (18, 180) besitzt, damit die Mehrfachprüfbecher-Bogeneinheit (12, 14, 16) lösbar an dem Außenkreis (C) der Reaktionsprüfbecher (18, 180) eingehakt werden kann, wobei die untere Außenkante (36) der Bogeneinheit auf den Reaktionsprüfbecherflanschen (20) ruht.

5. Analysegerät nach Anspruch 1, dadurch gekennzeichnet, daß jeder Verdünnungsprüfbecher einen konkaven Boden besitzt.

6. Analysegerät nach Anspruch 5, dadurch gekennzeichnet, daß jeder Verdünnungsprüfbecher (41—45) aus einem hochpolierten Material gebildet ist.

7. Analysegerät nach Anspruch 5 oder 6, dadurch gekennzeichnet, daß der Boden jedes Verdünnungsprüfbechers (41—45) aus vier sich nach unten neigenden zusammenwirkenden planaren Bodenabschnitten (61—64) gebildet ist, die gemeinsam zur Schaffung des konkaven Bodens geformt sind.

8. Analysegerät nach einem vorangehenden Anspruch, dadurch gekennzeichnet, daß in jeder Bogeneinheit (12, 14, 16) fünf Prüfbecher (41—45) vorgesehen sind.

9. Analysegerät nach einem vorangehenden Anspruch, dadurch gekennzeichnet, daß die Verdünnungsprüfbecher (41—45) einen annähernd elliptischen Querschnitt besitzen.

10. Analysegerät nach Anspruch 1, dadurch gekennzeichnet, daß jeder Reaktionsprüfbecher (180) vertikal angeordnet ist und einen nach unten gerichteten Flüssigkeitsstrom aufzunehmen vermag, wobei jeder Reaktionsprüfbecher (180) eine in etwa vertikal aufrecht stehende Wand (72) mit kontinuierlicher ringförmiger Erstreckung aufweist, wobei jeder Reaktionsprüfbecher (180) an der Oberseite offen ist, wobei das Bodeninnere jedes Reaktionsprüfbechers (180) einen flachen Abschnitt (82) in seiner Mitte besitzt, wobei der Außenumfang des flachen Abschnitts (82) mit dem unteren Abschnitt der Wand (72) über einen geneigten Abschnitt (80) verbunden ist, und wobei der Winkel des geneigten Abschnitts (80) su der Horizontalen weniger als etwa 45° beträgt, wodurch Spritzen mit resultierendem unvollständigem Mischen verhindert wird.

11. Analysegerät nach Anspruch 10, dadurch gekennzeichnet, daß der Winkel des geneigten Abschnitts (80) jedes Reaktionsprüfbechers (180) etwa 35° beträgt.

## Revendications

1. Analyseur spectrophotométrique (S) ayant un transporteur à plateau tournant (T) avec un cercle extérieur (C) de cuvettes de réaction espacées (18, 180) et un cercle intérieur espacé (A) de cuvettes à échantillon, caractérisé par un cercle intermédiaire (B) de cuvettes de dilution (41 à 45) formé de plusieurs ensembles unitaires d'une seule pièce en arc (12, 14, 16) à multiples cuvettes, disposés entre les cercles intérieur et extérieur (A, C) de cuvettes.

2. Analyseur selon la revendication 1, dans lequel chaque ensemble en arc à multiples cuvettes (12, 14, 16) porte des moyens de fixation (22, 24) pour fixer de façon détachable l'ensemble en arc au cercle extérieur (C) de cuvettes de réaction.

3. Analyseur selon l'une des revendications 1 et 2, dans lequel le cercle intermédiaire (B) de cuvettes de dilution (41, 45) et le cercle extérieur (C) de cuvettes de réaction (18, 180) sont formés comme un seul ensemble unitaire d'une seule pièce.

4. Analyseur selon la revendication 1, dans lequel chaque cuvette de réaction (18, 180) a un rebord horizontal (20) entourant sa surface extérieure et espacé du sommet de chaque cuvette de réaction et lesdits moyens de fixation (22, 24) comprennent une paire de bras radiaux espacés s'étendant radialement vers l'extérieur à partir du côté extérieur (26) de chaque ensemble en arc à multiples cuvettes (12, 14, 16) pour le positionnement dans les espaces respectifs (28, 29) entre des cuvettes de réaction correspondantes (18, 180) dans le cercle extérieur (C), chaque bras ayant sur son extrémité extérieure une tige verticale (32, 34) plus large que l'espace (28, 29) entre des cuvettes de réaction adjacentes (18, 180), permettant ainsi à l'ensemble en arc à cuvettes multiples (12, 14, 16) d'être accroché de façon détachable sur le cercle extérieur (C) de cuvettes de réaction (18, 180), le bord extérieur inférieur (36) de l'ensemble en arc reposant sur les rebords (20) des cuvettes de réaction.

5. Analyseur selon la revendication 1, dans lequel chaque cuvette de dilution a un fond concave.

6. Analyseur selon la revendication 5, dans lequel chaque cuvette de dilution (41 à 45) est formée d'une matière fortement polie.

7. Analyseur selon les revendications 5 et 6, dans lequel le fond de chaque cuvette de dilution (41 à 45) est formé de quatre parties de fond planes coopérantes (61 à 64), inclinées vers le bas, formées ensemble pour constituer le fond concave.

8. Analyseur selon l'une quelconque des revendications précédentes, dans lequel chaque ensemble en arc (12, 14, 16) comprend cinq cuvettes (41 à 45).

9. Analyseur selon l'une quelconque des revendications précédentes, dans lequel les cuvettes de dilution (41 à 45) sont approximativement elliptiques en section transversale.

10. Analyseur selon la revendication 1, dans lequel chaque cuvette de réaction (180) est disposée verticalement et conçue pour recevoir un courant de liquide dirigé vers le bas, chaque cuvette de réaction (180) comprenant une paroi s'étendant généralement verticalement (72) suivant une forme annulaire continue, chaque cuvette de réaction (180) étant ouverte au sommet, l'intérieur du fond de chaque cuvette de réaction (180) ayant une partie plane (82) en son centre, la périphérie de cette partie plane (82) étant réunie à la partie inférieure de la paroi (72) par une partie inclinée (80), l'angle avec l'horizontale de la partie inclinée (80) étant inférieur à environ 45° de sorte que l'éclaboussure, entraînant un mélange incomplet, est empêchée.

11. Analyseur selon la revendication 10, dans lequel l'angle de la partie inclinée (80) de chaque cuvette de réaction (180) est d'environ 35°.

**0 100 663**

Fig 1

Fig 2

Fig 3

1

Fig. 4

Fig 5

Fig 6

Fig 7

Fig 8

2

Fig 9

Fig 10